# EUROPÄISCHE PATENTSCHRIFT

(11) **EP 3 306 578 B1**
(45) Veröffentlichungstag und Bekanntmachung des Hinweises auf die Patenterteilung: **03.03.2021**
(21) Anmeldenummer: 17194127.1
(22) Anmeldetag: 29.09.2017
(51) Int. Cl.: G07C 9/00, G06Q 10/08, G06Q 50/28, G06Q 50/30

(54) **BERECHTIGUNG ZUM ÖFFNEN EINES AUFNAHMEFACHS EINES UNBEMANNTEN FAHRZEUGS**
AUTHORISATION FOR OPENING A STORAGE COMPARTMENT OF AN UNMANNED VEHICLE
AUTORISATION D'OUVERTURE D'UN COMPARTIMENT DE RÉCEPTION D'UN VÉHICULE SANS CONDUCTEUR

(30) Priorität: 06.10.2016 DE 102016118994
(43) Veröffentlichungstag der Anmeldung: 11.04.2018
(73) Patentinhaber: Deutsche Post AG, 53113 Bonn (DE)
(72) Erfinder: WIECHERS, Ralph, 53508 Mayschoß (DE); IBACH, Christian, 53175 Bonn (DE)
(74) Vertreter: Cohausz & Florack

(56) Entgegenhaltungen:
- US-A1- 2011 137 759
- US-A1- 2014 254 896
- US-A1- 2015 006 005
- US-A1- 2015 301 150
- US-B1- 9 256 852
- Anonymous: "Oostdorp Posts - IMAVS.ORG", , 15 August 2014 (2014-08-15), XP055589217, Retrieved from the Internet: URL:https://web.archive.org/web/2016073105 5740/http://www.imavs.org/tag/oostdorp/ [retrieved on 2019-05-16]

## Beschreibung

### Gebiet

Die Erfindung betrifft ein Verfahren, eine Vorrichtung und ein Computerprogramm zum Prüfen der Berechtigung zum Öffnen eines Aufnahmefachs eines unbemannten Fahrzeugs.

### Hintergrund

Im Stand der Technik sind unbemannte Fahrzeuge mit einem Aufnahmefach zum Transport von einer oder mehreren Sendungen bekannt. Um eine Sendung aus dem Aufnahmefach entnehmen zu können, muss das Aufnahmefach geöffnet werden. Hierfür erhält der Sendungsempfänger beispielsweise einen Code, mit dem er seine Berechtigung zum Öffnen des Aufnahmefachs gegenüber dem unbemannten Fahrzeug nachweisen kann. Dies ist zwar für den Sendungsempfänger komfortabel, allerdings besteht die Gefahr, dass der Code durch einen Angreifer abgefangen oder, wenn er ausreichend Zeit hat, erraten wird, so dass dies gerade für den Transport von wertvollen Sendungen als unsicher angesehen wird.

In US 9,256,852 wird eine automatisierte Lieferplattform beschrieben, bei der ein Empfänger eine Lieferung durch Eingabe einer PIN aus einem gesicherten Behältnis entnehmen kann.

In US 2015/301150 A1 wird ein Beacon-Gerät beschrieben, welches einen Beacon-Code-Generator enthält, der Beacon-Daten erzeugt, die einen Abonnenten eindeutig kennzeichnen. Ein Beacon-Generator erzeugt ein drahtloses Homing-Beacon, das die Beacon-Daten anzeigt. Das drahtlose Homing-Beacon kann von mindestens einem Drohnen-Liefergerät erkannt werden, um eine Dienstbereitstellung durch das Drohnen-Liefergerät am Standort des Beacon-Geräts zu erleichtern.

In US 2011/0137759 A1 wird ein System beschrieben, welches ein Rechensystem umfasst. Das Rechensystem umfasst einen Prozessor, ein erstes Modul, ein zweites Modul und ein drittes Modul. Das erste Modul ist kommunikativ mit dem Prozessor verbunden und für den Empfang von Chain-of-Custody-Informationen konfiguriert, die mit einem Artikel verbunden sind. Das zweite Modul ist kommunikativ mit dem Prozessor verbunden und so konfiguriert, dass es den Status des Artikels auf der Grundlage der empfangenen Chain-of-Custody-Informationen bestimmt. Das dritte Modul ist kommunikativ mit dem Prozessor verbunden und ist für die Anordnung von Daten in einem bestimmten Format konfiguriert. Die Daten umfassen den Status des Artikels und die Chain-of-Custody-Informationen. Das dritte Modul ist ebenfalls für die Übertragung der Daten konfiguriert.

In US 2014/0254896 A1 ist ein System und ein Verfahren vorgesehen zur Zustellung von Post und Waren unter Verwendung eines mobilen Roboterdrohnensystems. Das Verfahren kann die Selbstbewegung des mobilen Roboterdrohnensystems zu einem Post- oder Warenempfangsort umfassen. Die Daten über den Post- oder Warenempfangsort und die zuzustellende Post oder Waren werden von einem Benutzer empfangen. Die Fahrtroute zum Ort des Post- oder Wareneingangs wird auf der Grundlage der von einem GPS-Gerät empfangenen Fahrtroutendaten bestimmt. Am Standort empfängt das mobile Roboterdrohnensystem die Post oder Güter über ein Post- und Güterabteil und liefert die Post oder Güter dann an einen vordefinierten Ort. Auf der Grundlage von Benutzeranweisungen signiert das mobile Roboterdrohnensystem elektronisch Empfangsbestätigungsdokumente oder führt die Zahlung durch, indem es einen Zahlungs-Barcode anzeigt, der die Zahlungsinformationen des Benutzers kodiert. Nach der Zustellung der Post oder Güter bietet das mobile Roboterdrohnensystem Zugang zum Post- und Güterabteil.

In US 2015/0006005 A1 wird beschrieben, wie ein autonomes unbemanntes Straßenfahrzeug für Lieferungen eingesetzt werden kann. Das unbemannte Fahrzeug ist in der Lage, autonom auf befestigten Straßen zu operieren. Das Fahrzeug verfügt über ein Steuerungssystem für autonomes Fahren und ein Wahrnehmungssystem zur Erkennung von Objekten in seiner Umgebung. Das Fahrzeug verfügt auch über einen oder mehrere Laderäume zur Beförderung der Liefergegenstände. Das Fahrzeug kann zur Erhöhung der Auffälligkeit des Fahrzeuges mit einer Blitzleuchte ausgestattet sein. Unter Berücksichtigung der Tatsache, dass das Fahrzeug keine Passagiere befördert, kann die Größe und/oder Motorleistung des Fahrzeugs im Vergleich zu herkömmlichen Personenfahrzeugen reduziert werden.

In "Oostdorp Posts - IMAVS.ORG", gefunden im Internet unter https://web.archive.org/web/20160731055740/http://www.imavs.org/tag/oostdor p/ am 16. Mai 2019, werden die Ergebnisse der "International Micro Air Vehicle Conference and Flight Competition" 2014 genannt, wobei einige der teilnehmenden Teams das Erkennen von Hausnummern demonstrierten.

### Zusammenfassung einiger beispielhafter Ausführungsformen der Erfindung

Die vorliegende Erfindung hat sich daher unter anderem die Aufgabe gestellt, diese Probleme zu überwinden und die Sicherheit für Sendungen beim Transport in unbemannten Fahrzeugen zu erhöhen.

Gemäß der Erfindung wird ein Verfahren zum Prüfen der Berechtigung zum Öffnen eines Aufnahmefachs eines unbemannten Fahrzeugs offenbart, wobei das Verfahren Folgendes umfasst:
- Erhalten einer Anforderung zum Öffnen des Aufnahmefachs des unbemannten Fahrzeugs und einer ersten Berechtigungsnachweisinformation;
- Erfassen einer Position des unbemannten Fahrzeugs und zumindest eines von der Position des unbemannten Fahrzeugs abhängigen Umweltparameters, wobei der von der Position des unbemannten Fahrzeugs abhängige Umweltparameter ein drahtloses Kommunikationssignal ist
- Prüfen der Berechtigung der Anforderung zum Öffnen des Aufnahmefachs des unbemannten Fahrzeugs in Abhängigkeit von der erhaltenen ersten Berechtigungsnachweisinformation, der erfassten Position des unbemannten Fahrzeugs und dem erfassten Umweltparameter, wobei das Prüfen der Berechtigung der Anforderung zum Öffnen des Aufnahmefachs das Prüfen, ob der erfasste Umweltparameter mit einem vorgegebenen Umweltparameter übereinstimmt, umfasst, wobei das Prüfen, ob der erfasste Umweltparameter mit einem vorgegebenen Umweltparameter übereinstimmt, nur dann eine Übereinstimmung ergibt, wenn die Identität und/oder Herkunft des erfassten drahtlosen Kommunikationssignals einer vorgegebenen Identität und/oder Herkunft entspricht; und
- Öffnen und/oder Bewirken des Öffnens des Aufnahmefachs des unbemannten Fahrzeugs nur dann, wenn das Prüfen ergibt, dass die Anforderung zum Öffnen des Aufnahmefachs des unbemannten Fahrzeugs berechtigt ist.

Das erfindungsgemäße Verfahren wird beispielsweise durch das unbemannte Fahrzeug oder eine Vorrichtung, die Teil des unbemannten Fahrzeugs ist, ausgeführt.

Gemäß der Erfindung wird ferner eine Vorrichtung offenbart, wobei die Vorrichtung Mittel eingerichtet zur Ausführung des erfindungsgemäßen Verfahrens oder jeweilige Mittel zur Ausführung der Schritte des erfindungsgemäßen Verfahrens umfasst.

Dabei können verschiedene Schritte optional von verschiedenen Mitteln ausgeführt werden.

Die Mittel der erfindungsgemäßen Vorrichtung können Hardware- und/oder Software-Komponenten umfassen. Die Mittel können beispielsweise mindestens einen Speicher mit Programmanweisungen eines Computerprogramms (z.B. des erfindungsgemäßen Computerprogramms) und mindestens einen Prozessor ausgebildet zum Ausführen von Programmanweisungen aus dem mindestens einen Speicher umfassen. Dementsprechend soll gemäß der Erfindung auch eine Vorrichtung offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das erfindungsgemäße Verfahren auszuführen und/oder zu steuern.

Alternativ oder zusätzlich können die Mittel ferner eine oder mehrere drahtlose Kommunikationsschnittstellen (z.B. eine oder mehrere drahtlose Netzwerkadapter) und/oder eine oder mehrere Benutzerschnittstellen (z.B. eine Tastatur, eine Maus, eine Kamera, einen Bildschirm, einen berührungsempfindlichen Bildschirm, einen Lautsprecher, ein Mikrofon, usw.) umfassen. Es versteht sich, dass die Vorrichtung auch andere nicht aufgeführte Mittel umfassen kann.

Die erfindungsgemäße Vorrichtung ist beispielsweise eine Vorrichtung zum Prüfen der Berechtigung zum Öffnen eines Aufnahmefachs eines unbemannten Fahrzeug. Die erfindungsgemäße Vorrichtung entspricht beispielsweise dem mobilen unbemannten Gerät oder ist Teil des unbemannten Geräts.

Gemäß der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die erfindungsgemäße Vorrichtung) zu veranlassen, das Verfahren gemäß dem ersten Aspekt auszuführen.

Das erfindungsgemäße Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Im Folgenden werden die Merkmale des erfindungsgemäßen Verfahrens, der erfindungsgemäßen Vorrichtung und des erfindungsgemäßen Computerprogramms - teilweise beispielhaft - beschrieben.

Unter einem unbemannten Fahrzeug soll beispielsweise ein Luft-, Wasser- und/oder Landfahrzeug verstanden werden, zum Beispiel ein Luft-, Wasser- und/oder Landfahrzeug, das Mittel zum Aufnehmen und/oder Transportieren einer oder mehrerer Sendungen umfasst und sich zumindest teilweise autonom bewegen kann. Zum Beispiel umfasst das unbemannte Fahrzeug zumindest ein durch eine Tür und/oder Klappe verschließbares Aufnahmefach zum Aufnehmen und Transportieren einer oder mehrerer Sendungen. Eine Sendung ist beispielsweise ein Packstück, ein Stückgut, eine Paketsendung (z.B. ein Paket) und/oder eine Briefsendung (z.B. ein Brief). Die Tür und/oder Klappe verschließt beispielsweise eine Gehäuse- und/oder Karosserieöffnung des unbemannten Fahrzeugs, durch die ein Aufnahmefach des Fahrzeugs zugänglich ist. Ein unbemanntes Fahrzeug ist beispielsweise nicht zum Transport von Personen (z.B. weder zum Transport eines Fahrers noch von Passagieren) vorgesehen.

Die Anforderung zum Öffnen des Aufnahmefachs des unbemannten Fahrzeugs ist beispielsweise eine Anforderung mit der ein Öffnen des Aufnahmefachs des unbemannten Fahrzeugs veranlasst werden soll.

Die erste Berechtigungsnachweisinformation enthält und/oder repräsentiert zum Beispiel Information zum Nachweis der Berechtigung eines Benutzers zum Öffnen des Aufnahmefachs des unbemannten Fahrzeugs, beispielsweise um eine Sendung aus dem Aufnahmefach entnehmen oder in das Aufnahmefach legen zu können. Unter einer Berechtigungsnachweisinformation sollen beispielsweise ein Passwort, eine Passphrase, eine persönliche Identifizierungsnummer (PIN), ein Code, eine Geste, ein biometrisches Merkmal (z.B. Stimme, Gesicht, Fingerabdruck und/oder Iris), ein Sicherheitstoken, ein QR-Code, ein Barcode und/oder eine digitale Signatur verstanden werden.

Im erfindungsgemäßen Verfahren wird eine Anforderung zum Öffnen eines Aufnahmefaches des unbemannten Fahrzeugs und eine erste Berechtigungsnachweisinformation erhalten.

Die Anforderung zum Öffnen des Aufnahmefachs des unbemannten Fahrzeugs kann die erste Berechtigungsnachweisinformation enthalten. Zum Beispiel ist die erste Berechtigungsnachweisinformation ein Teil der Anforderung zum Öffnen des Aufnahmefachs des unbemannten Fahrzeugs, so dass die Anforderung zum Öffnen des Aufnahmefachs des unbemannten Fahrzeugs und die erste Berechtigungsnachweisinformation gleichzeitig erhalten werden. Alternativ kann die erste Berechtigungsnachweisinformation aber auch separat von der Anforderung zum Öffnen des Aufnahmefachs des unbemannten Fahrzeugs erhalten werden.

Die Anforderung zum Öffnen des Aufnahmefachs des unbemannten Fahrzeugs und/oder die erste Berechtigungsnachweisinformation können beispielsweise in Form einer Benutzereingabe und/oder einer Kommunikationsnachricht erhalten werden. Zum Beispiel werden die Anforderung zum Öffnen des Aufnahmefachs des unbemannten Fahrzeugs und/oder die erste Berechtigungsnachweisinformation an dem unbemannten Fahrzeug und/oder der erfindungsgemäßen Vorrichtung erhalten.

Das Erfassen der Position erfolgt beispielsweise kontinuierlich (z.B. in regelmäßigen oder unregelmäßigen Zeitabständen) durch einen Positionssensor.

Der Positionssensor ist zum Beispiel ein Positionssensor eines Satelliten gestützten Positionierungssystems wie dem GPS-System (Global Positioning System), dem GLONASS-System, dem Galileo-System und/oder dem Beidou-System.

Alternativ oder zusätzlich erfolgt das Erfassen der Position zumindest teilweise durch das Erfassen von Kommunikationssignalen gemäß einer drahtlosen Kommunikationstechnik an der Position (z.B. durch eine drahtlose Kommunikationsschnittstelle). Zum Beispiel kann zumindest teilweise in Abhängigkeit der an der Position erfassbaren drahtlosen Kommunikationssignale gemäß einer drahtlosen Kommunikationstechnik eine Triangulation und/oder Trilateration zur Bestimmung der Position durchgeführt werden. Ein Beispiel für eine drahtlose Kommunikationstechnik ist eine lokale Funknetztechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC- sind beispielsweise gemäß den ISO-Standards 18000, 11784/11785 und dem ISO/IEC-Standard 14443-A und 15693 spezifiziert. Die Bluetooth-Spezifikationen sind derzeit im Internet unter www.bluetooth.org erhältlich. WLAN ist zum Beispiel in den Standards der IEEE-802.11-Familie spezifiziert. Ein weiteres Beispiel für eine drahtlose Kommunikationstechnik ist eine überregionale Funknetztechnik wie beispielsweise ein Low Power Wide Area Network (LPWAN) und/oder eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich. Ein Beispiel für eine LPWAN Spezifikation ist die von der LoRa Alliance entwickelte und gepflegte LoRa-Standard (www.lora-alliance.org).

Die erfasste Position repräsentiert beispielsweise die zuletzt erfasste Position des unbemannten Fahrzeugs. Wenn sich das unbemannte Fahrzeug in einem Gebäude befindet und der Positionssensor zum Beispiel keine Satellitensignale zum Erfassen der Position empfangen kann, repräsentiert die erfasste Position beispielsweise die zuletzt (z.B. vor dem Betreten des Gebäudes) erfasste Position des unbemannten Fahrzeugs.

Zusätzlich zu der Position des unbemannten Fahrzeugs wird ein von der Position des unbemannten Fahrzeugs abhängiger Umweltparameter erfasst. Unter dem Erfassen des Umweltparameters soll insbesondere das Erfassen eines Werts des Umweltparameters verstanden werden.

Der Umweltparameter wird beispielsweise durch einen Sensor des unbemannten Fahrzeugs erfasst. Das Erfassen des Umweltparameters erfolgt beispielsweise kontinuierlich (z.B. in regelmäßigen oder unregelmäßigen Zeitabständen). Alternativ wird der Umweltparameter beispielsweise nur dann (z.B. an der aktuellen Position des unbemannten Fahrzeugs) erfasst, wenn eine Anforderung zum Öffnen des Aufnahmefachs des unbemannten Fahrzeugs erhalten wird. Unter einem von der Position des unbemannten Fahrzeugs abhängigen Umweltparameter soll beispielsweise eine physikalische und/oder chemische Größe verstanden werden, deren Wert abhängig von der Position des unbemannten Fahrzeugs ist. Erfindungsgemäß ist der Umweltparameter ein drahtloses Kommunikationssignal.

Zum Beispiel kann dadurch sichergestellt werden, dass sich das unbemannte Fahrzeug aktuell an einer bestimmten Position (d.h. eine Position, an der der Umweltparameter erfassbar ist) befindet. Dies ist beispielsweise vorteilhaft, wenn an der aktuellen Position des unbemannten Fahrzeugs kein oder nur ein ungenaues Erfassen der Position des unbemannten Fahrzeugs möglich ist wie es häufig innerhalb von Gebäuden (z.B. in Wohn- oder Bürohochhäusern, in Einkaufzentren oder in Messehallen) oder in Gebieten mit hohen Gebäuden der Fall ist.

Das Prüfen der Berechtigung der Anforderung zum Öffnen des Aufnahmefachs eines unbemannten Fahrzeugs umfasst das Prüfen in Abhängigkeit der erfassten Position des unbemannten Fahrzeugs, des erfassten Umweltparameters und der erhaltenen ersten Berechtigungsnachweisinformation, ob das Aufnahmefach geöffnet werden darf. Dabei umfasst das Prüfen der Berechtigung der Anforderung zum Öffnen des Aufnahmefachs das Prüfen, ob der erfasste Umweltparameter mit einem vorgegebenen Umweltparameter übereinstimmt, wobei das Prüfen, ob der erfasste Umweltparameter mit einem vorgegebenen Umweltparameter übereinstimmt, nur dann eine Übereinstimmung ergibt, wenn die Identität und/oder Herkunft des erfassten drahtlosen Kommunikationssignals einer vorgegebenen Identität und/oder Herkunft entspricht. Zum Beispiel kann zusätzlich vorgegeben sein, dass das Aufnahmefach nur an einer vorgegebenen Position oder innerhalb eines vorgegebenen Gebiets geöffnet werden darf. Dabei ist vorgegeben dass das Aufnahmefach nur geöffnet werden darf, wenn die erste Berechtigungsnachweisinformation zum Öffnen des Aufnahmefachs des unbemannten Fahrzeugs berechtigt.

Unter dem Öffnen und/oder dem Bewirken des Öffnens soll beispielsweise verstanden werden, dass ein Öffnungsmechanismus einer Tür und/oder eine Klappe des unbemannten Fahrzeugs, die ein Aufnahmefach des unbemannten Fahrzeugs verschließt, angesteuert wird, um den Öffnungsmechanismus zu veranlassen, die Tür und/oder die Klappe zu öffnen (z.B. zu entriegeln und zu öffnen). Beispielsweise umfasst die erfindungsgemäße Vorrichtung Ansteuerungsmittel, die eingerichtet sind, einen Öffnungsmechanismus einer Tür und/oder eine Klappe des unbemannten Fahrzeugs entsprechend anzusteuern. Ein Beispiel für einen solchen Öffnungsmechanismus ist ein elektronisch ansteuerbares Türschloss und/oder eine elektronisch ansteuerbare Verriegelungseinheit. Es versteht sich, dass die erfindungsgemäße Vorrichtung den Öffnungsmechanismus umfassen kann. Der Öffnungsmechanismus kann jedoch auch separat von der erfindungsgemäßen Vorrichtung sein.

Durch die Berücksichtigung der erfassten Position, des erfassten Umweltparameters und der Berechtigungsinformation beim Prüfen der Berechtigung der Anforderung zum Öffnen des Aufnahmefachs des unbemannten Fahrzeugs kann das Öffnen des Aufnahmefachs des unbemannten Fahrzeugs auf eine vorgegebene Position oder ein vorgegebenes geographisches Gebiet beschränkt werden - auch wenn an der aktuellen Position des unbemannten Fahrzeugs kein oder nur ein ungenaues Erfassen der Position des unbemannten Fahrzeugs möglich ist. Dies ist insbesondere in Fällen, in denen das unbemannte Fahrzeug zum Transport einer Sendung dient vorteilhaft, da in diesen Fällen die Einlieferungs- und Auslieferungsposition der Sendung häufig von vorneherein feststeht und nur an diesen Positionen ein (berechtigtes) Öffnen des Aufnahmefachs des unbemannten Fahrzeugs erwartet wird. Unberechtigte Öffnungsversuche durch einen Angreifer auf dem Transportweg werden somit unterbunden - selbst wenn der Angreifer Kenntnis der ersten Berechtigungsnachweisinformation erlangt hat. Die Erfindung erhöht somit die Sicherheit beim Transport für Sendungen beim Transport in unbemannten Fahrzeugen.

In einer beispielhaften Ausführungsform der Erfindung wird die Anforderung zum Öffnen des Aufnahmefachs durch eine Benutzerschnittstelle und/oder durch eine drahtlose Kommunikationsschnittstelle an dem unbemannten Fahrzeug erhalten. Zum Beispiel sind die Benutzerschnittstelle und/oder die drahtlose Kommunikationsschnittstelle zum Erhalten der Anforderung zum Öffnen des Aufnahmefachs ein Teil der erfindungsgemäßen Vorrichtung und/oder des unbemannten Fahrzeugs.

Eine Benutzerschnittstelle ist, wie oben offenbart, beispielsweise eine Tastatur, eine Maus, eine Kamera, ein Bildschirm, ein berührungsempfindlicher Bildschirm, ein Lautsprecher und/oder ein Mikrofon. Durch eine solche Benutzerschnittstelle kann die Anforderung zum Öffnen des Aufnahmefachs beispielsweise als Benutzereingabe (z.B. als Tastatur- oder Mauseingabe und/oder als Spracheingabe und/oder als Geste) erhalten werden, zum Beispiel kann eine solche Benutzereingabe von einem Sendungsempfänger und/oder Sendungsabsender erhalten werden.

Eine drahtlose Kommunikationsschnittstelle ist beispielsweise eingerichtet zum Senden und/oder Empfangen von Informationen gemäß einer drahtlosen Kommunikationstechnik. Wie oben offenbart, sind Beispiele für eine drahtlose Kommunikationstechnik lokale Funknetztechniken (z.B. RFID, NFC, Bluetooth und/oder WLAN) sowie überregionale Funknetztechniken (z.B. LPWAN und/oder Mobilfunktechniken).

Unter einer drahtlosen Kommunikationsschnittstelle soll beispielsweise ein drahtloser Netzwerkadapter (z.B. ein RFID-, NFC-, Bluetooth-, WLAN-, LPWAN-, GSM-, UMTS- und/oder LTE-Netzwerkadapter) verstanden werden. Ein solcher drahtloser Netzwerkadapter umfasst beispielsweise zumindest eine Antenne und eine Sendeempfangsschaltung.

Durch eine drahtlose Kommunikationsschnittstelle kann die Anforderung zum Öffnen des Aufnahmefachs beispielsweise als Kommunikationsnachricht über eine drahtlosen Kommunikationspfad (z.B. gemäß einer der o.g. drahtlose Kommunikationstechniken) erhalten (d.h. empfangen) werden, zum Beispiel kann eine solche Kommunikationsnachricht von einem Benutzerendgerätgerät eines Sendungsempfängers und/oder Sendungsabsenders erhalten (d.h. empfangen) werden.

In einer beispielhaften Ausführungsform der Erfindung wird die erste Berechtigungsnachweisinformation durch eine Benutzerschnittstelle, eine Kartenschnittstelle und/oder durch eine drahtlose Kommunikationsschnittstelle an dem unbemannten Fahrzeug erhalten.

Die Benutzerschnittstelle und/oder die drahtlose Kommunikationsschnittstelle und/oder die Kartenschnittstelle zum Erhalten der ersten Berechtigungsnachweisinformation sind beispielsweise ein Teil der erfindungsgemäßen Vorrichtung und/oder des unbemannten Fahrzeugs.

Die Benutzerschnittstelle und/oder die drahtlose Kommunikationsschnittstelle zum Erhalten der ersten Berechtigungsnachweisinformation entsprechen beispielsweise der oben offenbarten Benutzerschnittstelle und/oder Kommunikationsschnittstelle zum Erhalten der Anforderung zum Öffnen des Aufnahmefachs. Alternativ können die Benutzerschnittstelle und/oder die drahtlose Kommunikationsschnittstelle zum Erhalten der ersten Berechtigungsnachweisinformation aber auch verschieden von der oben offenbarten Benutzerschnittstelle und/oder Kommunikationsschnittstelle zum Erhalten der Anforderung zum Öffnen des Aufnahmefachs sein.

Die erste Berechtigungsnachweisinformation kann durch die Benutzerschnittstelle beispielsweise als Benutzereingabe (z.B. als Tastatur- oder Mauseingabe und/oder als Stimm- oder Spracheingabe und/oder als Geste und/oder als Eingabe eines biometrischen Merkmals) erhalten werden, zum Beispiel kann eine solche Benutzereingabe von einem Sendungsempfänger und/oder Sendungsabsender erhalten werden.

Alternativ oder zusätzlich kann die erste Berechtigungsnachweisinformation durch die drahtlose Kommunikationsschnittstelle als Kommunikationsnachricht über einen drahtlose Kommunikationspfad (z.B. gemäß einer der o.g. drahtlose Kommunikationstechniken) erhalten (d.h. empfangen) werden, zum Beispiel kann eine solche Kommunikationsnachricht von einem Benutzergerät eines Sendungsempfängers und/oder Sendungsabsenders erhalten (d.h. empfangen) werden.

Ferner kann auch vorgesehen sein, dass die erste Berechtigungsnachweisinformation alternativ oder zusätzlich als Kommunikationsnachricht durch eine Kartenschnittstelle erhalten wird. Eine Kartenschnittstelle ist beispielsweise ein Kartenlesegerät für eine Chipkarte (z.B. für eine Geldkarte und/oder eine Bezahlkarte wie eine Kreditkarte oder eine Bankkarte und/oder eine Chipkarte gemäß dem ISO 7816 Standard). Zum Beispiel wird die Kommunikationsnachricht durch die Kartenschnittstelle von einer mit der Kartenschnittstelle verbundenen Chipkarte des Sendungsempfängers und/oder Sendungsabsenders erhalten.

In einer beispielhaften Ausführungsform der Erfindung wird eine zweite Berechtigungsnachweisinformation erhalten. Zum Beispiel wird die zweite Berechtigungsnachweisinformation separat von der ersten Berechtigungsnachweisinformation an dem unbemannten Fahrzeug erhalten.

Die zweite Berechtigungsnachweisinformation kann beispielsweise durch eine Benutzerschnittstelle, eine Kartenschnittstelle und/oder durch eine drahtlose Kommunikationsschnittstelle an dem unbemannten Fahrzeug erhalten werden, beispielsweise durch eine andere Schnittstelle (z.B. durch eine andere Benutzerschnittstelle und/oder eine andere Kartenschnittstelle und/oder eine andere drahtlose Kommunikationsschnittstelle) als die erste Berechtigungsnachweisinformation.

Die zweite Berechtigungsnachweisinformation ist beispielsweise von der ersten Berechtigungsnachweisinformation verschieden. Die zweite Berechtigungsnachweisinformation enthält und/oder repräsentiert zum Beispiel eine Information zum Nachweis der Berechtigung eines Benutzers (z.B. eines Sendungsempfängers und/oder Sendungsabsenders) zum Öffnen des Aufnahmefachs des unbemannten Fahrzeugs. Dies ist beispielsweise vorteilhaft, um eine Zwei-Faktor Authentifizierung zu ermöglichen.

In einer nicht beanspruchten Ausführungsform der Erfindung ist ein von der Position des unbemannten Fahrzeugs abhängiger Umweltparameter ein Bild einer Umgebung des unbemannten Fahrzeugs (z.B. ein an der aktuellen Position des unbemannten Fahrzeugs erfasstes Bild).

Das Bild repräsentiert zum Beispiel eine Darstellung (z.B. eine zwei- oder dreidimensionale Darstellung und/oder eine graphische Darstellung) einer Umgebung des Fahrzeugs.

Zum Beispiel erfolgt das Erfassen des zumindest einen von der Position des unbemannten Fahrzeugs abhängigen Umweltparameters durch Erfassen eines Bilds einer Umgebung des Fahrzeugs. Das Bild wird beispielsweise durch einen Bildsensor der erfindungsgemäßen Vorrichtung und/oder des unbemannten Fahrzeugs erfasst. Zum Beispiel wird das Bild erfasst und/oder das Erfassen des Bilds bewirkt, wenn eine Anforderung zum Öffnen des Aufnahmefachs des unbemannten Fahrzeugs erhalten wird.

Ein solches Bild kann charakteristisch für die Position (z.B. die aktuelle Position) des Fahrzeugs sein, beispielsweise kann das Bild ein für die Position des Fahrzeugs charakteristisches Umgebungsmerkmal wie eine Hausnummer eines Gebäudes in der Umgebung des Fahrzeugs, eine Haus- oder Wohnungstür in der Umgebung des Fahrzeugs, ein Klingelschild in der Umgebung des Fahrzeugs, ein Barcode in der Umgebung des Fahrzeugs (z.B. an einer Haus- oder Wohnungstür), ein biometrisches Merkmal in der Umgebung des Fahrzeugs (z.B. ein Gesicht eines Hausmeisters und/oder Pförtners) und/oder eine Landmarke (z.B. ein Straßenschild und/oder ein charakteristisches Gebäude, etc.) in der Umgebung des Fahrzeugs enthalten.

In einer beispielhaften Ausführungsform der Erfindung ist ein von der Position des unbemannten Fahrzeugs abhängiger Umweltparameter ein Geräusch, ein Strahlungsmuster, ein Signalmuster, ein Laserabtastmuster und/oder ein Radarabtastmuster. Auch hierbei kann es sich um für die Position des Fahrzeugs charakteristische Umweltparameter handeln.

In der beanspruchten Ausführungsform der Erfindung ist ein von der Position des unbemannten Fahrzeugs abhängiger Umweltparameter eine Verfügbarkeit zumindest eines drahtlosen Kommunikationssignals (z.B. an der aktuellen Position des unbemannten Fahrzeuges).

Das drahtlose Kommunikationssignal soll als verfügbar an der Position (z.B. der aktuellen Position) des unbemannten Fahrzeuges verstanden werden, wenn es durch eine drahtlose Kommunikationsschnittstelle an der Position des unbemannten Fahrzeuges erfassbar ist. Ferner kann beispielsweise vorgegeben sein, dass das drahtlose Kommunikationssignal nur dann verfügbar ist, wenn es mit einer Signalstärke oberhalb eines vorgegebenen Signalstärkeschwellwerts oder innerhalb eines Signalstärkewertebereichs durch eine drahtlose Kommunikationsschnittstelle an der Position des unbemannten Fahrzeuges erfassbar ist. Zum Beispiel ist das drahtlose Kommunikationssignal ein LPWAN-, WLAN-, Bluetooth-, RFID- und/oder NFC-Funksignal. Hierbei handelt es sich um drahtlose Kommunikationstechniken mit einer geringen Reichweite (z.B. weniger als 50 m, vorzugsweise weniger als 20 m, besonders vorzugsweise weniger als 5 m), so dass die Verfügbarkeit eines solchen drahtlosen Kommunikationssignals charakteristisch für die Position des Fahrzeugs ist.

In der Erfindung erfolgt das Erfassen des zumindest einen von der Position des unbemannten Fahrzeugs abhängigen Umweltparameters durch Erfassen zumindest eines drahtlosen Kommunikationssignals an der Position des unbemannten Fahrzeugs. Es versteht sich, dass auch weitere drahtlose Kommunikationssignale erfasst werden können.

Das drahtlose Kommunikationssignal wird beispielsweise durch eine drahtlose Kommunikationsschnittstelle des unbemannten Fahrzeuges erfasst.

Zum Beispiel wird das drahtlose Kommunikationssignal erfasst und/oder das Erfassen des drahtlosen Kommunikationssignals bewirkt, wenn eine Anforderung zum Öffnen des Aufnahmefachs des unbemannten Fahrzeugs erhalten wird.

In der Erfindung repräsentiert das drahtlose Kommunikationssignal oder ein Teil des drahtlosen Kommunikationssignals eine Prüfinformation. Die Prüfinformation kann beispielsweise Teil einer in dem drahtlosen Kommunikationssignal enthaltenen oder davon repräsentierten Kommunikationsnachricht sein. Die Prüfinformation ist eingerichtet, ein Prüfen und/oder Bestimmen der Identität und/oder Herkunft des drahtlosen Kommunikationssignals zu ermöglichen. Zu diesem Zweck kann die Prüfinformation eine digitale Signatur, die die Herkunft und/oder Identität des Kommunikationssignals bestätigt, und/oder eine Kennung (z.B. eine Adresse wie eine MAC-Adresse oder eine IP-Adresse und/oder ein Name wie ein Netzwerkname oder ein SSID) des Senders des drahtlosen Kommunikationssignals enthalten. Alternativ oder zusätzlich kann die Prüfinformation beispielsweise eine Antwort auf eine Anfrage gemäß einem Challenge-Response-Verfahren repräsentieren. Ferner kann die Prüfinformation auch eine Nachricht gemäß einem Schlüsselaustauschprotokoll wie beispielsweise dem Diffie-Hellman-Schlüsselaustauschprotokoll oder dem Perfect Forward Secrecy-Schlüsselaustauschprotokolls sein.

Zum Beispiel handelt es sich bei dem drahtlosen Kommunikationssignal um ein Kommunikationssignal eines Bluetooth-Beacons, beispielsweise eines Kommunikationssignals von einem an der Einlieferungs- und/oder Auslieferungsposition bereitgestellten Bluetooth-Beacons. Zum Beispiel können Sendungsabsender und/oder -empfänger einen solchen Bluetooth-Beacon von dem Transportunternehmen erhalten und an einer gewünschten Auslieferungs- und/oder Einlieferungsposition (z.B. ihrer Wohnungstür) anbringen.

Das Prüfen der Berechtigung der Anforderung zum Öffnen des Aufnahmefachs umfasst das Prüfen, ob der zumindest eine erfasste Umweltparameter mit einem vorgegebenen Umweltparameter übereinstimmt. In einer beispielhaften Ausführungsform der Erfindung umfasst das Prüfen der Berechtigung der Anforderung zum Öffnen des Aufnahmefachs zusätzlich:
- Prüfen, ob die erfasste Position mit einer vorgegebenen Position übereinstimmt oder innerhalb eines vorgegeben geographischen Gebiets liegt, und
- Prüfen, ob die erste Berechtigungsnachweisinformation zum Öffnen des Aufnahmefachs des unbemannten Fahrzeugs berechtigt.

Das Prüfen, ob die erfasste Position mit einer vorgegebenen Position übereinstimmt oder innerhalb eines vorgegeben geographischen Gebiets liegt, kann beispielsweise durch einen Vergleich der erfassten Position mit der vorgegebenen Position oder mit dem vorgegebenen geographischen Gebiet erfolgen.

Ferner erfolgt das Prüfen, ob der erfasste Umweltparameter mit einem vorgegebenen Umweltparameter übereinstimmt, durch einen Vergleich mit dem vorgegebenen Umweltparameter. Dabei kann der Vergleich mit einem für den Umweltparameter vorgegebenen Wert, Schwellwert und/oder Wertebereich stattfinden. Alternativ oder zusätzlich kann vorgegeben sein, dass ab einer bestimmten Wahrscheinlichkeit (z.B. mehr als 50 %, vorzugsweise mehr als 75 %, besonders vorzugsweise mehr als 90 % oder mehr als 95 %) für eine Übereinstimmung des erfassten Umweltparameters mit dem vorgegebenen Umweltparameter eine Übereinstimmung vorliegt.

Wie oben offenbart, kann der erfasste Umweltparameter beispielsweise eine Verfügbarkeit eines drahtlosen Kommunikationssignals sein. In diesem Beispiel kann als Umweltparameter ein Signalstärkeschwellwert vorgegeben sein, oberhalb dessen ein erfasstes drahtloses Kommunikationssignals als verfügbar gilt. In diesem Beispiel ergibt das Prüfen, ob der erfasste Umweltparameter mit einem vorgegebenen Umweltparameter übereinstimmt, nur dann eine Übereinstimmung, wenn das erfasste drahtlose Kommunikationssignal mit einer Signalstärke oberhalb des Signalstärkeschwellwerts erfasst wird. Es wird eine Identität und/oder Herkunft eines erfassten drahtlosen Kommunikationssignals vorgegeben (z.B. durch Vorgabe einer Kennung des Senders des Kommunikationssignals). Die Identität und/oder Herkunft des erfassten drahtlosen Kommunikationssignals kann beispielsweise durch die oben offenbarte Prüfinformation bestimmt werden. Das Prüfen, ob der erfasste Umweltparameter mit einem vorgegebenen Umweltparameter übereinstimmt, ergibt nur dann eine Übereinstimmung, wenn die Identität und/oder Herkunft des erfassten drahtlosen Kommunikationssignals der vorgegebenen Identität und/oder Herkunft entspricht.

Ferner kann der erfasste Umweltparameter, wie in einer nicht beanspruchten Ausführungsform oben offenbart, zum Beispiel ein Bild sein. In diesem Beispiel ist der vorgegebene Umweltparameter beispielsweise ein charakteristisches Umgebungsmerkmal wie eine Hausnummer eines Gebäudes, eine Haus- oder Wohnungstür, ein Klingelschild und/oder eine Landmarke (z.B. ein Straßenschild und/oder ein charakteristisches Gebäude, etc.). Zum Beispiel ergibt das Prüfen, ob der erfasste Umweltparameter mit einem vorgegebenen Umweltparameter übereinstimmt, dann eine Übereinstimmung, wenn das erfasste Bild das vorgegebene charakteristische Umgebungsmerkmal mindestens mit der bestimmten Wahrscheinlichkeit enthält. Dadurch können Veränderungen (z.B. jahreszeitliche und/oder wetterbedingte Veränderungen) in der Umgebung berücksichtigt werden. Es versteht sich, dass Berechtigungserfordernisvorgabeinformationen, die die vorgegebene Position, das vorgegebene geographische Gebiet und/oder den vorgegebenen Umweltparameter repräsentieren, in einem Speicher des unbemannten Fahrzeugs und/oder der erfindungsgemäßen Vorrichtung gespeichert sein können (z.B. als Teil der unten offenbarten Berechtigungserfordernisvorgabe). Zum Beispiel werden diese Berechtigungserfordernisvorgabeinformationen von einem Server (z.B. eines Transportunternehmens) an das unbemannte Fahrzeug und/oder die erfindungsgemäße Vorrichtung kommuniziert und anschließend in einem Speicherdes unbemannten Fahrzeugs und/oder der erfindungsgemäßen Vorrichtung gespeichert.

Wie oben offenbart, enthält und/oder repräsentiert die erste Berechtigungsnachweisinformation zum Beispiel eine Information zum Nachweis der Berechtigung eines Benutzers (z.B. eines Sendungsempfängers und/oder Sendungsabsenders) zum Öffnen des Aufnahmefachs des unbemannten Fahrzeugs. Beispielsweise wird eine solche Berechtigungsnachweisinformation für die Auslieferung (oder Einlieferung) einer Sendung in einem Speicher des unbemannten Fahrzeugs und/oder der erfindungsgemäßen Vorrichtung gespeichert. Zum Beispiel wird eine Berechtigungsnachweisinformation für die Auslieferung (oder Einlieferung) einer Sendung von einem Server (z.B. eines Transportunternehmens) erzeugt und an das unbemannte Fahrzeug und/oder die erfindungsgemäße Vorrichtung und an den Sendungsempfänger (oder Sendungsabsender) und/oder ein Benutzerendgerät des Sendungsempfängers (oder Sendungsabsenders) kommuniziert, so dass der Sendungsempfänger (oder Sendungsabsender) seine Berechtigung zum Öffnen des Aufnahmefachs des unbemannten Fahrzeugs durch die Berechtigungsnachweisinformation gegenüber dem unbemannten Fahrzeug und/oder der erfindungsgemäßen Vorrichtung nachweisen kann.

Das Prüfen, ob die erste Berechtigungsnachweisinformation zum Öffnen des Aufnahmefachs des unbemannten Fahrzeugs berechtigt, erfolgt beispielsweise durch einen Vergleich der durch die erhaltene erste Berechtigungsnachweisinformation repräsentierte und/oder darin enthaltene Berechtigungsnachweisinformation mit einer in einem Speicher des unbemannten Fahrzeug und/oder der erfindungsgemäßen Vorrichtung gespeicherten Berechtigungsnachweisinformation.

Alternativ oder zusätzlich kann die erste Berechtigungsnachweisinformation beispielsweise eine oder mehrere Gültigkeitsinformationen enthalten wie beispielsweise eine (insbesondere eindeutige) Kennung für das unbemannte Fahrzeug, eine (insbesondere eindeutige) Kennung für die erste Berechtigungsnachweisinformation selbst, eine zeitliche Gültigkeitsinformation (z.B. in Form eines "Nicht-Vor-Datums", eines "Nicht-Nach-Datums", einer "Startzeit des Tages" und einer "Endzeit des Tages", die angeben, innerhalb welcher Tage und innerhalb welcher Tageszeit die erste Berechtigungsnachweisinformation zum Öffnen des Aufnahmefachs des unbemannten Fahrzeugs berechtigt, beispielsweise vom 27.3.2014 00:00:00 Uhr bis zum 28.3.2014 23:59:59 Uhr) und/oder eine räumliche Gültigkeitsinformation (z.B. in Form der vorgegebenen Position und/oder des vorgegebenen geographischen Gebiets und/oder des vorgegebenen Umweltparameters). Dementsprechend kann das Prüfen auch ein Prüfen der Gültigkeit der ersten Berechtigungsnachweisinformation in Abhängigkeit der Gültigkeitsinformationen umfassen.

Ferner kann ggfs. auch eine zweite Berechtigungsnachweisinformation, die wie oben offenbart beispielsweise separat von der ersten Berechtigungsnachweisinformation an dem unbemannten Fahrzeug erhalten wird, geprüft werden, ob sie (z.B. alleine oder in Kombination mit der ersten Berechtigungsnachweisinformation) zum Öffnen des Aufnahmefachs des unbemannten Fahrzeugs berechtigt. Dies kann entsprechend dem Prüfen der ersten Berechtigungsnachweisinformation erfolgen.

Zum Beispiel ist die vorgegebene Position eine Auslieferungs- und/oder Einlieferungsposition einer Sendung und/oder das vorgegebene geographischen Gebiet ein Gebiet um eine Auslieferungs- und/oder Einlieferungsposition einer Sendung wie ein Gebiet innerhalb eines vorgegebenen Abstands (z.B. weniger als 100 m, vorzugsweise weniger als 50 m, besonders vorzugsweise weniger als 10 m) um eine Auslieferungs- und/oder Einlieferungsposition.

Die Auslieferungsposition einer Sendung (z.B. einer von dem unbemannten Fahrzeug transportierten Sendung) entspricht beispielsweise der Adresse des Empfängers der Sendung. Eine Einlieferungsposition einer Sendung (z.B. eine von dem unbemannten Fahrzeug zu transportierenden Sendung) entspricht beispielsweise der Adresse des Absenders der Sendung. Es versteht sich, dass die Auslieferungsposition auch einer von dem Empfänger der Sendung für die Auslieferung der Sendung vorgegebene Position sein kann und dass die Einlieferungsposition auch einer von dem Absender der Sendung für die Einlieferung der Sendung vorgegebene Position sein kann. Dies ist beispielsweise vorteilhaft, um ein (unberechtigtes) Öffnen des Aufnahmefachs zu verhindern, wenn sich das unbemannte Fahrzeug nicht an der Auslieferungs- und/oder Einlieferungsposition der Sendung befindet.

Zum Beispiel ist der vorgegebene Umweltparameter ein an der Auslieferungs- und/oder Einlieferungsposition der Sendung erfassbarer Umweltparameter. Dies ist beispielsweise vorteilhaft, um verifizieren zu können, dass sich das unbemannte Fahrzeug tatsächlich an der Auslieferungs- und/oder Einlieferungsposition der Sendung befindet.

In einer beispielhaften Ausführungsform der Erfindung erfolgt das Prüfen der Berechtigung der Anforderung zum Öffnen des Aufnahmefachs zumindest teilweise in Abhängigkeit einer oder mehrerer Berechtigungserfordernisvorgaben. Dabei können die Berechtigungserfordernisvorgaben beispielsweise vorgeben unter welchen Bedingungen die Anforderung zum Öffnen des Aufnahmefachs berechtigt ist.

Zum Beispiel können die Berechtigungserfordernisvorgaben einer vorgegebenen Position oder einem vorgegebenen geographischen Gebiet und einem vorgegebenen Umweltparameter eine Berechtigungsnachweisinformation oder eine Kombination von Berechtigungsnachweisinformationen für die Auslieferung (oder Einlieferung) einer Sendung an dieser Position oder in diesem geographischen Gebiet zuordnen. In diesem Beispiel können die Berechtigungserfordernisvorgaben beispielsweise vorgeben, dass, wenn das Prüfen ergibt, dass die erfasste Position mit der vorgegebenen Position übereinstimmt oder innerhalb des vorgegebenen geographischen Gebiets liegt und der erfasste Umweltparameter mit dem vorgegebenen Umweltparameter übereinstimmt und die erhaltene erste Berechtigungsnachweisinformation mit der Berechtigungsnachweisinformation für die Auslieferung (oder Einlieferung) einer Sendung an dieser Position oder in diesem geographischen Gebiet übereinstimmt, die Anforderung zum Öffnen des Aufnahmefachs des unbemannten Fahrzeugs berechtigt ist. Alternativ kann auch eine Kombination von Berechtigungsnachweisinformationen für die Auslieferung (oder Einlieferung) einer Sendung an dieser Position oder in diesem geographischen Gebiet notwendig sein, so dass die Anforderung zum Öffnen des Aufnahmefachs des unbemannten Fahrzeugs beispielsweise nur dann berechtigt ist, wenn die erhaltene erste Berechtigungsnachweisinformation und eine zweite erhaltene Berechtigungsnachweisinformation mit dieser Kombination übereinstimmt.

Es versteht sich, dass die Berechtigungserfordernisvorgaben auch ein Trustlevel vorgeben können, anhand dessen entschieden wird, ob die Anforderung zum Öffnen des Aufnahmefachs des unbemannten Fahrzeugs berechtigt ist. Dabei können zum Beispiel die Ergebnisse des Prüfens der erfassten Position des unbemannten Fahrzeugs, des erfassten Umweltparameters und der erhaltenen ersten Berechtigungsnachweisinformation (und ggfs. einer erhaltenen zweiten Berechtigungsnachweisinformation) auf Basis des vorgegebenen Trustlevel gewichtet werden und anschließend zumindest teilweise abhängig von dieser Gewichtung entschieden werden, ob die die Anforderung zum Öffnen des Aufnahmefachs des unbemannten Fahrzeugs berechtigt ist.

Zum Beispiel könnte ein solches Trustlevel (z.B. für Sendungen mit einem Wert über 500,- €) vorgeben, dass die mit einer vorgegebenen Gewichtung (z.B. 40:60) gewichtete Kombination der Ergebnisse des Prüfens der erfassten Position des unbemannten Fahrzeugs und des erfassten Umweltparameters größer als eine bestimmte Wahrscheinlichkeit (z.B. mehr als 95 %) sein muss, damit die Anforderung zum Öffnen des Aufnahmefachs des unbemannten Fahrzeugs berechtigt ist.
Die Berechtigungserfordernisvorgaben werden zum Beispiel zumindest teilweise in Abhängigkeit eines Sendungsempfängers und/oder -absenders (z.B. historischer Bestelldaten und/oder des Orts und Zeitpunkts der Bestellung einer Sendung und/oder einer Klassifizierung des Sendungsempfängers), einer von dem unbemannten Fahrzeug transportierten Sendung (z.B. dem Wert der Sendung), der erfassten Position des unbemannten Fahrzeugs und/oder des erfassten Umweltparameters bestimmt.

Zum Beispiel kann für Sendungen mit einem hohen Wert eine Kombination von Berechtigungsnachweisinformationen vorgegeben sein, wohingegen für Sendungen mit einem niedrigen Wert eine Berechtigungsnachweisinformation ausreicht. Zum Beispiel kann für Sendungen mit einem niedrigen Wert eine erste Berechtigungsnachweisinformation in Form einer durch eine Benutzerschnittstelle erhaltenen Benutzereingabe wie ein Passwort, eine Passphrase, eine PIN oder ein Code ausreichen. Dagegen kann für Sendungen mit einem hohen Wert eine erste Berechtigungsnachweisinformation in Form einer durch eine Benutzerschnittstelle erhaltenen Benutzereingabe wie ein Passwort, eine Passphrase, eine PIN oder ein Code nur in Kombination mit einer zweiten Berechtigungsnachweisinformation in Form einer durch eine Kartenschnittstelle und/oder durch eine drahtlose Kommunikationsschnittstelle erhaltene Kommunikationsnachricht ausreichen.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer Ausführungsform einer erfindungsgemäßen Vorrichtung;
- Fig. 2: eine schematische Darstellung einer Ausführungsform eines Systems mit einer erfindungsgemäßen Vorrichtung;
- Fig. 3: ein Flussdiagramm eines Ausführungsbeispiels eines erfindungsgemäßen Verfahrens;
- Fig. 4: mögliche Schritte im Rahmen eines Prüfens, ob eine Anforderung zum Öffnen eines Aufnahmefachs eines unbemannten Fahrzeugs berechtigt ist; und
- Fig. 5: beispielhafte Ausführungsformen von Speichermedien.

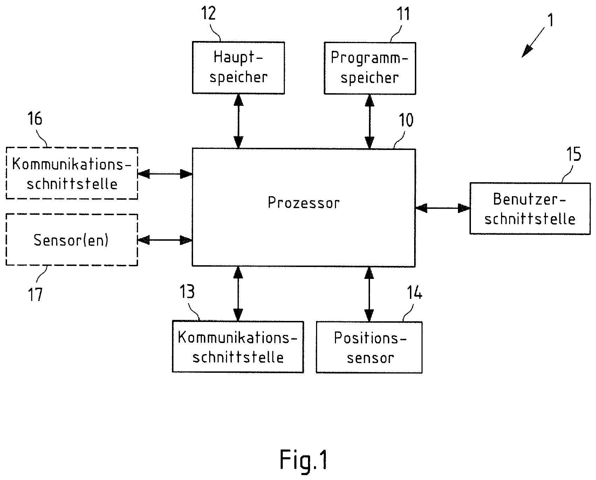

Fig. 1 ist eine schematische Darstellung einer beispielhaften Ausführungsform einer erfindungsgemäßen Vorrichtung 1.

Die Vorrichtung 1 umfasst beispielhaft einen Prozessor 10 und verbunden mit dem Prozessor 10 einen ersten Speicher als Programm- und Datenspeicher 11, einen zweiten Speicher als Hauptspeicher 12, eine erste drahtlose Kommunikationsschnittstelle 13, einen Positionssensor 14 und eine Benutzerschnittstelle 15. Ferner kann die Vorrichtung 1 optional eine zweite drahtlose Kommunikationsschnittstelle 16 und/oder einen oder mehrere Sensoren 17 fassen.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Vorrichtung 1 auch mehrere Prozessoren 10 umfassen kann.

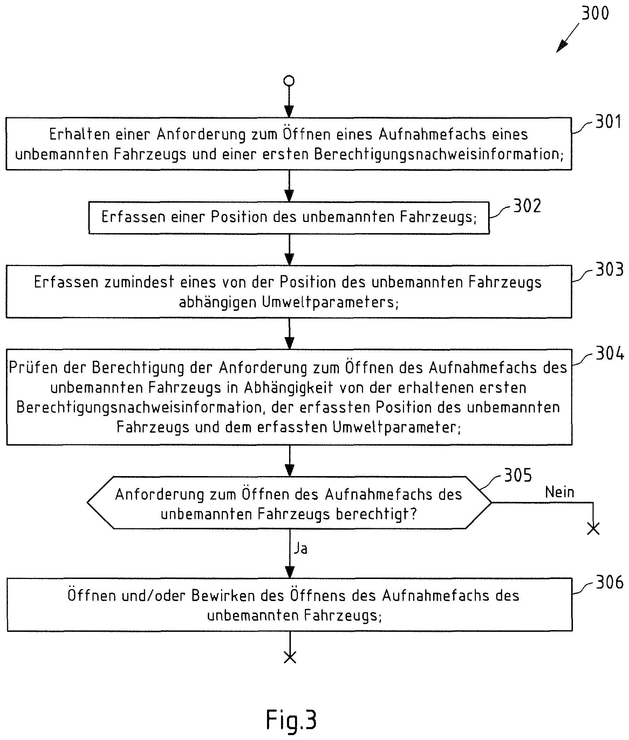

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines erfindungsgemäßen Computerprogramms, das Programmanweisungen umfasst, die den Prozessor 10 veranlassen, das erfindungsgemäße Verfahren (z.B. das Verfahren gemäß dem in Fig. 3 dargestellten Flussdiagram 300) auszuführen und/oder zu steuern, wenn der Prozessor 10 diese in Programmspeicher 11 gespeicherten Programmanweisungen ausführt. Außerdem können in Programmspeicher 11 eine oder mehrere Berechtigungserfordernisvorgabeinformationen gespeichert sein.

Programmspeicher 11 enthält ferner beispielsweise das Betriebssystem der Vorrichtung 1, das beim Starten der Steuerungsvorrichtung 1 zumindest teilweise in Hauptspeicher 12 geladen und vom Prozessor 10 ausgeführt wird. Insbesondere wird beim Starten der Vorrichtung 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuerungsvorrichtung zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

Prozessor 10 steuert die erste drahtlose Kommunikationsschnittstelle 13, welche beispielsweise als Bluetooth-Schnittstelle ausgebildet ist.

Eine drahtlose Kommunikationsschnittstelle kann beispielsweise Informationen (über einen drahtlosen Kommunikationspfad) empfangen und an den Prozessor weiterleiten und/oder Informationen von dem Prozessor empfangen und (über einen drahtlosen Kommunikationspfad) senden. Ein Beispiel für eine drahtlose Kommunikationsschnittstelle ist ein drahtloser Netzwerkadapter. Zum Beispiel umfasst eine drahtlose Kommunikationsschnittstelle nebst einer Antenne zumindest eine Senderschaltung und eine Empfängerschaltung oder eine Sendeempfängerschaltung.

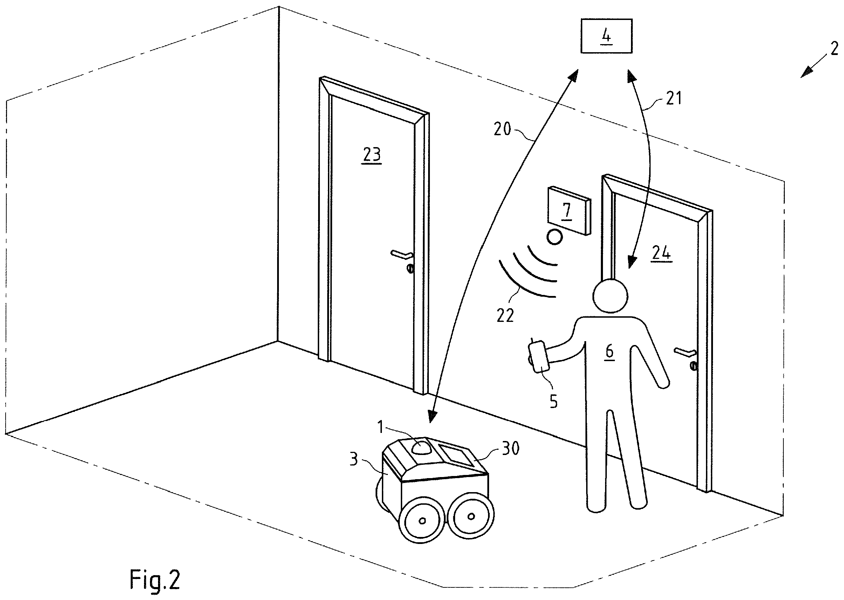

Die drahtlose Kommunikationsschnittstelle 13 ist beispielsweise eingerichtet zum Empfangen eines drahtlosen Kommunikationssignals (z.B. eines Bluetooth-Signals des in Fig. 2 dargestellten Bluetooth-Beacons 7). Ferner ist die drahtlose Kommunikationsschnittstelle 13 zum Beispiel eingerichtet zum Kommunizieren mit einem Benutzerendgerät (z.B. dem in Fig. 2 dargestellten Benutzerendgerät 5) über eine Bluetooth-Verbindung.

Positionssensor 14 ist beispielsweise eingerichtet zum Erfassen einer Position der Vorrichtung 1. Zum Beispiel ist Positionssensor 14 ein Positionssensor eines Satelliten gestützten Positionierungssystems wie dem GPS-System, dem GLONASS-System, dem Galileo-System und/oder dem Beidou-System. Auch Positionssensor 14 wird durch Prozessor 10 gesteuert.

Ferner steuert Prozessor 10 Benutzerschnittstelle 15, welche eingerichtet ist zum Ausgeben von Informationen an einen Benutzer und/oder zum Erfassen von Eingaben eines Benutzers. Wie oben offenbart, kann eine Benutzerschnittstelle eine Tastatur, eine Maus, ein Bildschirm, ein berührungsempfindlicher Bildschirm, ein Lautsprecher, ein Mikrofon, usw. sein.

Die optionale zweite drahtlose Netzwerkschnittstelle 16 wird ebenfalls durch Prozessor 10 gesteuert und ist beispielsweise als GSM-, UMTS- und/oder LTE-Schnittstelle ausgebildet. Sie ist beispielsweise eingerichtet zur Kommunikation mit einem Server (z.B. dem in Fig. 3 dargestellten Server 4 eines Transportunternehmens) über ein drahtloses Kommunikationsnetzwerk (z.B. ein GSM-, UMTS- und/oder LTE-Netzwerk).

Darüber hinaus steuert Prozessor 10 einen Sensor 17, beispielsweise einen Bildsensor 17. Ein Beispiel für einen Bildsensor 17 ist eine Kamera oder ein CMOS-Sensor oder ein CCD-Sensor. Er kann beispielsweise zum Erfassen eines Bilds einer Umgebung der Vorrichtung 1 eingerichtet sein.

Es versteht sich, dass die Vorrichtung 1 auch mehrere Sensoren 17 umfassen kann.

Die Komponenten 10 bis 17 der Vorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Vorrichtung 1 neben den Komponenten 10 bis 17 weitere Komponenten (z.B. eine Kartenschnittstelle wie ein Kartenlesegerät) umfassen kann.

Fig. 2 zeigt eine schematische Darstellung einer Ausführungsform eines Systems 2.

In Fig. 2 ist die im Zusammenhang mit Fig. 1 offenbarte Vorrichtung 1 beispielhaft als Teil eines unbemannten Fahrzeugs 3 dargestellt. Das unbemannte Fahrzeug 3 weist ferner ein mit einer Tür verschlossenes Aufnahmefach 30 auf. In dem Aufnahmefach 30 kann das unbemannte Fahrzeug 3 eine Sendung transportieren.

Neben dem unbemannten Fahrzeug 3 mit der Vorrichtung 1 umfasst System 2 ferner einen optionalen Server 4 eines Transportunternehmens und ein optionales Benutzerendgerät 5 eines Benutzers 6.

Das Benutzerendgerät 5 ist in Fig. 2 beispielhaft als Mobiltelefon dargestellt. Es versteht sich, dass es auch andere Ausgestaltungen haben kann. Beispielsweise kann das Benutzerendgerät auch eine Smartwatch, ein persönlicher digitaler Assistent, ein tragbares Navigationsgerät, ein Tabletcomputer und/oder ein Laptopcomputer sein.

Der Server 4 überwacht und disponiert die Einlieferung, den Transport und die Auslieferung einer Vielzahl von durch das Transportunternehmen zu transportierenden Sendungen. Zu diesem Zweck kann der Server 4 auch eine Vielzahl von unbemannten Fahrzeugen einsetzen und entsprechend steuern, beispielsweise zum Einliefern, Transportieren und Ausliefern einer oder mehrerer Sendungen innerhalb von Gebäuden (z.B. in Wohn- oder Bürohochhäusern, in Einkaufzentren oder in Messehallen).

In Fig. 2 sind optionale Kommunikationsverbindungen 20 und 21 dargestellt. Über Kommunikationsverbindung 20 kann Server 4 beispielsweise mit dem unbemannten Fahrzeug 3 kommunizieren; und über Kommunikationsverbindung 21 kann Server 4 beispielsweise mit dem mobilen Benutzerendgerät 5 kommunizieren. Die Kommunikationsverbindungen 20 und 21 sind zum Beispiel drahtlose Kommunikationsverbindungen über ein Mobilfunknetzwerk (z.B. ein GSM-, UMTS- und/oder LTE-Netzwerk) oder schließen eine oder mehrere drahtlose Kommunikationsverbindungen über ein solches Mobilfunknetzwerk ein.

Ferner umfasst das System ein optionales Bluetooth-Beacon 7, das ein Kommunikationssignal 22 aussendet.

In Fig. 2 ist das unbemannte Fahrzeug 3 beispielhaft in einem Hausflur eines Wohngebäudes zwischen einer Wohnungstür 23 und einer Wohnungstür 24 dargestellt. Zum Beispiel transportiert das unbemannte Fahrzeug 3 in dem Aufnahmefach 30 eine Sendung, die an den Benutzer 6 mit dem Benutzerendgerät 5 an der Wohnungstür 24 ausgeliefert werden soll.

Fig. 3 zeigt ein Flussdiagramm mit Schritten einer beispielhaften Ausführungsform eines erfindungsgemäßen Verfahrens. Im Folgenden wird beispielhaft angenommen, dass die Schritte 301 bis 306 des Flussdiagramms 300 durch die Vorrichtung 1, die Teil des unbemannten Fahrzeugs 3 in System 2 (vgl. Fig. 2) ist, ausgeführt werden.

In einem Schritt 301 wird eine Anforderung zum Öffnen des Aufnahmefachs 30 des unbemannten Fahrzeugs 3 und eine erste Berechtigungsnachweisinformation an der Vorrichtung 1 erhalten.

Bei der ersten Berechtigungsnachweisinformation handelt es sich zum Beispiel um ein Passwort, eine Passphrase, einen PIN oder einen Code. Beispielsweise hat der Server die erste Berechtigungsnachweisinformation für eine Auslieferung einer im Aufnahmefach 30 des unbemannten Fahrzeugs transportierte Sendung erzeugt und anschließend über die Kommunikationsverbindungen 20 und 21 an die Vorrichtung 1 und das Benutzerendgerät 5 des Benutzers 6, der beispielsweise der Sendungsempfänger der im Aufnahmefach 30 des unbemannten Fahrzeugs 3 transportierten Sendung ist, kommuniziert. Die erste Berechtigungsnachweisinformation wird beispielsweise in Speicher 11 der Vorrichtung 1 gespeichert (z.B. als Berechtigungserfordernisvorgabeinformation).

Mithilfe der ersten Berechtigungsnachweisinformation kann der Benutzer 6 somit seine Berechtigung zum Öffnen des Aufnahmefachs 30 des unbemannten Fahrzeugs 3 gegenüber der Vorrichtung 1 nachweisen.

Zum Beispiel wird die Anforderung zum Öffnen des Aufnahmefachs 30 des unbemannten Fahrzeugs 3 und/oder die erste Berechtigungsnachweisinformation in Schritt 301 durch die Benutzerschnittstelle 15 der Vorrichtung 1 als Eingabe des Benutzers 6 erhalten. Es versteht sich, dass die Anforderung zum Öffnen des Aufnahmefachs 30 des unbemannten Fahrzeugs 3 und/oder die erste Berechtigungsnachweisinformation in Schritt 301 alternativ beispielsweise auch durch die drahtlose Kommunikationsschnittstelle 13 der Vorrichtung als Kommunikationsnachricht von dem Benutzerendgerät 6 empfangen werden kann.

In einem Schritt 302 wird die Position des unbemannten Fahrzeugs 3 erfasst. Die Position des unbemannten Fahrzeugs 3 wird beispielsweise durch den Positionssensor 14 der Vorrichtung 1 erfasst. Die Vorrichtung 1 ist Teil des unbemannten Fahrzeugs 3, so dass die Position der Vorrichtung 1 der Position des unbemannten Fahrzeugs 3 entspricht.

Das Erfassen der Position des unbemannten Fahrzeugs 3 erfolgt beispielsweise kontinuierlich (z.B. in regelmäßigen oder unregelmäßigen Zeitabständen). Unter der in Schritt 302 erfassten Position soll beispielsweise die zuletzt durch den Positionssensor 14 erfasste Position des unbemannten Fahrzeugs 3 verstanden werden. Wenn sich das unbemannte Fahrzeug 3 zum Beispiel in einem Gebäude befindet und der Positionssensor 14 keine Satellitensignale zum Erfassen der Position empfangen kann, soll unter der in Schritt 302 erfassten Position die zuletzt (z.B. vor dem Betreten des Gebäudes) durch den Positionssensor 14 erfasste Position des unbemannten Fachzeugs 3 verstanden werden.

In einem Schritt 303 wird zumindest ein von der Position des unbemannten Fahrzeugs 3 abhängiger Umweltparameter erfasst.

Wie oben offenbart, soll unter einem von der Position des unbemannten Fahrzeugs abhängigen Umweltparameter beispielsweise eine physikalische und/oder chemische Größe verstanden werden, deren Wert abhängig von der Position des unbemannten Fahrzeugs ist. Dementsprechend wird in Schritt 303 beispielsweise ein Wert des Umweltparameters erfasst.

Das Erfassen des Umweltparameters erfolgt beispielsweise kontinuierlich (z.B. in regelmäßigen oder unregelmäßigen Zeitabständen). Alternativ wird der Umweltparameter beispielsweise nur dann erfasst, wenn zuvor eine Anforderung zum Öffnen des Aufnahmefachs des unbemannten Fahrzeugs erhalten wird. Unter dem in Schritt 303 erfassten Umweltparameter soll beispielsweise der zuletzt erfasste Umweltparameter oder der zuletzt erfasste Wert des Umweltparameters verstanden werden.

Ein Beispiel für einen solchen Umweltparameter ist ein Bild einer Umgebung des unbemannten Fahrzeugs. Das Bild kann beispielsweise eine Darstellung der Wohnungstür 24 oder eines Teils der Wohnungstür 24 repräsentieren. Ein solches Bild wird beispielsweise durch den optischen Sensor 17 der Vorrichtung 1 erfasst.

Ein anderes Beispiel für einen Umweltparameter ist eine Verfügbarkeit eines Kommunikationssignals, zum Beispiel die Verfügbarkeit des von dem Bluetooth-Beacon 7 ausgesendeten Kommunikationssignals 22. Ein solches Kommunikationssignal kann beispielsweise durch die drahtlose Kommunikationsschnittstelle 16 der Vorrichtung 1 erfasst werden.

In einem Schritt 304 wird die Berechtigung der Anforderung zum Öffnen des Aufnahmefachs 30 des unbemannten Fahrzeugs 3 in Abhängigkeit von der in Schritt 301 erhaltenen ersten Berechtigungsinformation, der in Schritt 302 erfasste Position des unbemannten Fahrzeugs und dem in Schritt 303 erfassten Umweltparameter geprüft.

Zum Beispiel kann vorgegeben sein, dass das Aufnahmefach nur an einer vorgegebenen Position oder innerhalb eines vorgegebenen Gebiets und/oder nur für einen vorgegebenen Umweltparameter geöffnet werden darf. Ferner kann vorgegeben sein, dass das Aufnahmefach nur geöffnet werden darf, wenn die erste Berechtigungsnachweisinformation zum Öffnen des Aufnahmefachs des unbemannten Fahrzeugs berechtigt. Diese Berechtigungserfordernisvorgaben werden beispielsweise von Server 4 für eine Auslieferung der im Aufnahmefach 30 des unbemannten Fahrzeugs 3 transportierte Sendung erzeugt und anschließend als Berechtigungserfordernisvorgabeinformationen über Kommunikationsverbindung 20 an die Vorrichtung 1 kommuniziert und in Speicher 11 der Vorrichtung 1 gespeichert.

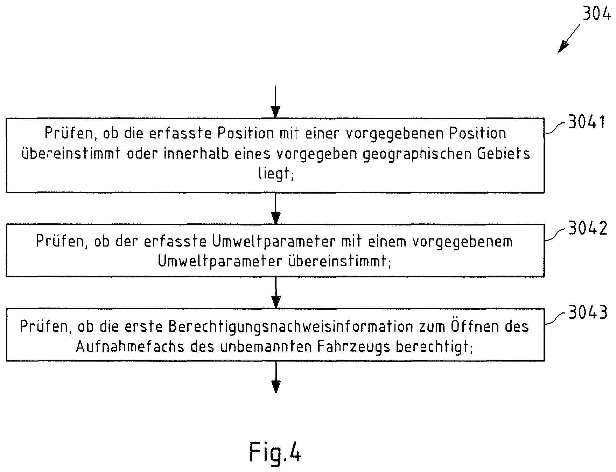

In Fig. 4 sind mögliche Schritte 3041 bis 3043 dargestellt, die gemäß einer beispielhaften Ausführungsform eines erfindungsgemäßen Verfahrens in Schritt 304 ablaufen können.

In Schritt 3041 wird geprüft, ob die in Schritt 302 erfasste Position mit einer vorgegebenen Position übereinstimmt oder innerhalb eines vorgegebenen geographischen Gebiets liegt. Hierzu findet beispielsweise ein Vergleich der in Schritt 302 erfassten Position mit der vorgegebenen Position oder dem vorgegebenen Gebiet statt.

Die vorgegebene Position ist beispielsweise ein für die im Aufnahmefach 30 des unbemannten Fahrzeugs 3 transportierte Sendung vorgesehene Auslieferungsposition (z.B. die Postadresse des Benutzers 6). Alternativ kann das vorgegebene Gebiet beispielsweise ein geographisches Gebiet mit im Aufnahmefach 30 des unbemannten Fahrzeugs 3 transportierte Sendung um diese Auslieferungsposition herum sein. Wenn die Auslieferung der Sendung in einem Gebäude stattfinden soll, entspricht die vorgegebene Position beispielsweise einem Eingang des Gebäudes und/oder liegt das Gebäude beispielsweise innerhalb des vorgegebenen Gebiets. Durch das Prüfen in Schritt 3041 kann somit festgestellt werden, ob sich das unbemannte Fahrzeug überhaupt in dem Gebäude oder in der Nähe des Gebäudes befindet.

In Schritt 3042 wird geprüft, ob der in Schritt 303 erfasste Umweltparameter mit einem vorgegebenen Umweltparameter übereinstimmt.

Der vorgegebene Umweltparameter ist beispielsweise ein für die Auslieferungsposition charakteristischer Umweltparameter und/oder ein für die Auslieferungsposition charakteristischer Wert und/oder Wertebereich eines Umweltparameters. Dadurch kann zum Beispiel sichergestellt werden, dass sich das unbemannte Fahrzeug 3 an oder in der Nähe der Auslieferungsposition befindet, wenn der in Schritt 303 erfasste Umweltparameter mit dem vorgegebenen Umweltparameter übereinstimmt. Dies ist beispielsweise vorteilhaft, wenn die Auslieferung innerhalb eines Gebäudes stattfinden soll, um in Schritt 3042 feststellen zu können, ob sich das unbemannte Fahrzeug in dem Gebäude an oder in der Nähe der Auslieferungsposition (z.B. der Wohnungstür 24) befindet.

Der vorgegebene Umweltparameter kann beispielsweise eine Verfügbarkeit eines an der Auslieferungsposition erfassbaren Kommunikationssignals (z.B. des von dem Bluetooth-Beacon 7 ausgesendeten Kommunikationssignals 22) sein. Hierzu kann beispielsweise eine Identität und/oder Herkunft des Kommunikationssignals und ein Signalstärkeschwellwert vorgegeben sein. Dabei kann das Prüfen in Schritt 3042 durch einen Vergleich der Signalstärke eines in Schritt 303 erfassten Kommunikationssignals mit dem vorgegebenen Signalstärkeschwellwert und das Prüfen und/oder Bestimmen der Identität und/oder Herkunft des erfassten Kommunikationssignals erfolgen. Zum Beispiel repräsentiert das erfasste Kommunikationssignal eine Prüfinformation die eingerichtet ist zum Prüfen und/oder Bestimmen der Identität und/oder Herkunft dieses Kommunikationssignals. Die Prüfinformation ist beispielsweise eine Kennung (z.B. eine Adresse wie eine MAC-Adresse oder eine IP-Adresse und/oder ein Name wie ein Netzwerkname oder ein SSID) des Senders des erfassten Kommunikationssignale. Zum Beispiel soll das Prüfen in Schritt 3042 nur dann ergeben, dass eine Übereinstimmung des erfassten Umweltparameters und des vorgegebenen Umweltparameters vorliegt, wenn in Schritt 303 ein Kommunikationssignal der vorgegebenen Identität und/oder Herkunft und mit einer Signalstärke oberhalb des vorgegebenen Signalstärkeschwellwerts erfasst wird.

Alternativ oder zusätzlich kann der vorgegebene Umweltparameter auch ein für die Auslieferungsposition charakteristisches Umgebungsmerkmal (z.B. die Wohnungstür 24 oder ein an der Wohnungstür 24 angebrachtes Klingelschild) sein. Zum Beispiel soll das Prüfen in Schritt 3042 nur dann ergeben, dass eine Übereinstimmung des erfassten Umweltparameters und des vorgegebenen Umweltparameters vorliegt, wenn das charakteristische Umgebungsmerkmal mindestens mit einer bestimmten Wahrscheinlichkeit (z.B. mehr als 50 %, vorzugsweise mehr als 75 %, besonders vorzugsweise mehr als 90 %) in einem in Schritt 303 erfassten Bild der Umgebung des unbemannten Fahrzeugs enthalten ist.

In Schritt 3043 wird geprüft, ob die in Schritt 301 erhaltene erste Berechtigungsnachweisinformation zum Öffnen des Aufnahmefachs 30 des unbemannten Fahrzeugs 3 berechtigt. Dies kann beispielsweise durch einen Vergleich der erhaltenen ersten Berechtigungsnachweisinformation mit einer im Speicher 11 der Vorrichtung 1 gespeicherten Berechtigungsnachweisinformation erfolgen. Nur wenn eine Übereinstimmung zwischen der erhaltenen ersten Berechtigungsnachweisinformation mit der im Speicher 11 gespeicherten Berechtigungsnachweisinformation vorliegt, ergibt das Prüfen in Schritt 3034 zum Beispiel, dass die in Schritt 301 erhaltene erste Berechtigungsnachweisinformation zum Öffnen des Aufnahmefachs 30 des unbemannten Fahrzeugs 3 berechtigt.

Es kann beispielsweise vorgegeben sein, dass das Prüfen in Schritt 304 nur dann ergibt, dass die Anforderung zum Öffnen des Aufnahmefachs 30 des unbemannten Fahrzeugs 3 berechtigt ist, wenn das Ergebnis der Schritte 3041, 3042 und 3043 ergibt, dass die oben genannten Berechtigungserfordernisvorgaben erfüllt sind.

Es versteht sich, dass die Berechtigungserfordernisvorgaben alternativ oder zusätzlich auch ein Trustlevel vorgeben können, anhand dessen entschieden wird, ob die Anforderung zum Öffnen des Aufnahmefachs 30 des unbemannten Fahrzeugs 3 berechtigt ist. Dabei können zum Beispiel die Ergebnisse des Prüfens der erfassten Position des unbemannten Fahrzeugs, des erfassten Umweltparameters und der erhaltenen ersten Berechtigungsnachweisinformation (und ggfs. einer erhaltenen zweiten Berechtigungsnachweisinformation) auf Basis des vorgegebenen Trustlevels gewichtet werden und anschließend zumindest teilweise abhängig von dieser Gewichtung entschieden werden, ob die die Anforderung zum Öffnen des Aufnahmefachs des unbemannten Fahrzeugs berechtigt ist.

Wenn das Prüfen in Schritt 304 ergibt, dass die Anforderung zum Öffnen des Aufnahmefachs 30 des unbemannten Fahrzeugs 3 nicht berechtigt ist, wird das Verfahren in einem Schritt 305 beendet.

Andernfalls wird das Aufnahmefach 30 des unbemannten Fahrzeugs 3 in einem Schritt 306 geöffnet und/oder das Öffnen des Aufnahmefachs 30 des unbemannten Fahrzeugs 3 bewirkt. Zum Beispiel steuert der Prozessor 10 der Vorrichtung 1 einen Öffnungsmechanismus der Tür des Aufnahmefachs 30 des unbemannten Fahrzeugs 3 an, um ein Öffnen des Aufnahmefachs 30 zu bewirken.

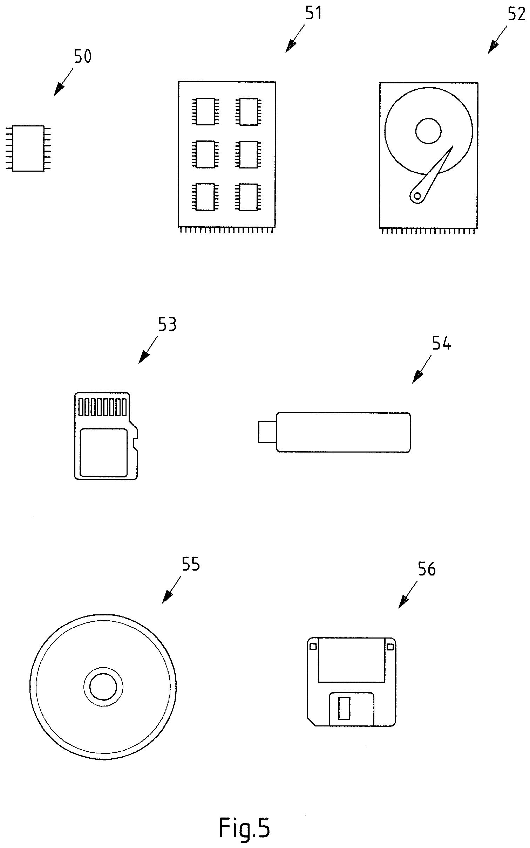

Fig. 5 zeigt schließlich beispielhafte Ausführungsformen von Speichermedien, auf denen ein Ausführungsbeispiel eines erfindungsgemäßen Computerprogramms gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 10 der Fig. 1) sein, beispielsweise ein (nicht-flüchtiger oder flüchtiger) Programmspeicher des Prozessors oder ein Teil davon (z.B. Speicher 11 in Fig. 1). Ausführungsbeispiele eines Speichermediums sind ein Flash-Speicher 50, eine SSD-Festplatte 51, eine magnetische Festplatte 52, eine Speicherkarte 53, ein Memory Stick 54 (z.B. ein USB-Stick), eine CD-ROM oder DVD 55 oder eine Diskette 56.

Die Beschreibung eines von einer Ausführungsform umfassten Merkmals - sofern nicht explizit gegenteilig erklärt - soll vorliegend nicht so verstanden werden, dass das Merkmal für die Funktion des Ausführungsbeispiels unerlässlich oder wesentlich ist. Die wesentlichen Merkmale werden von den unabhängigen Ansprüchen definiert. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Prüfen der Berechtigung zum Öffnen eines Aufnahmefachs (30) eines unbemannten Fahrzeugs (3), das Verfahren umfassend:
- Erhalten (301) einer Anforderung zum Öffnen des Aufnahmefachs (30) des unbemannten Fahrzeugs (3) und einer ersten Berechtigungsnachweisinformation;
- Erfassen (302-303) einer Position des unbemannten Fahrzeugs (3) und zumindest eines von der Position des unbemannten Fahrzeugs (3) abhängigen Umweltparameters, wobei der von der Position des unbemannten Fahrzeugs (3) abhängige Umweltparameter ein drahtloses Kommunikationssignal (22) ist;
- Prüfen (304) der Berechtigung der Anforderung zum Öffnen des Aufnahmefachs (30) des unbemannten Fahrzeugs (3) in Abhängigkeit von der erhaltenen ersten Berechtigungsnachweisinformation, der erfassten Position des unbemannten Fahrzeugs (3) und dem erfassten Umweltparameter, wobei das Prüfen der Berechtigung der Anforderung zum Öffnen des Aufnahmefachs das Prüfen (3042), ob der erfasste Umweltparameter mit einem vorgegebenen Umweltparameter übereinstimmt, umfasst, wobei das Prüfen, ob der erfasste Umweltparameter mit einem vorgegebenen Umweltparameter übereinstimmt, nur dann eine Übereinstimmung ergibt, wenn die Identität und/oder Herkunft des erfassten drahtlosen Kommunikationssignals einer vorgegebenen Identität und/oder Herkunft entspricht; und
- Öffnen und/oder Bewirken des Öffnens (306) des Aufnahmefachs (30) des unbemannten Fahrzeugs (3) nur dann, wenn das Prüfen ergibt, dass die Anforderung zum Öffnen des Aufnahmefachs (30) des unbemannten Fahrzeugs (3) berechtigt ist.

2. Verfahren nach Anspruch 1, wobei die Anforderung zum Öffnen des Aufnahmefachs durch eine Benutzerschnittstelle (15) und/oder durch eine drahtlose Kommunikationsschnittstelle (13, 16) an dem unbemannten Fahrzeug (3) erhalten wird.

3. Verfahren nach einem der Ansprüche 1 und 2, wobei die erste Berechtigungsnachweisinformation durch eine Benutzerschnittstelle (15) und/oder durch eine Kartenschnittstelle und/oder durch eine drahtlose Kommunikationsschnittstelle (13,16) an dem unbemannten Fahrzeug (3) erhalten wird.

4. Verfahren nach einem der Ansprüche 1 bis 3, wobei das drahtlose Kommunikationssignal ein Kommunikationssignal eines Bluetooth-Beacons ist, insbesondere ein Kommunikationssignal von einem an der Einlieferungs- und/oder Auslieferungsposition bereitgestellten Bluetooth-Beacons.

5. Verfahren nach einem der Ansprüche 1 bis 4, wobei das drahtlose Kommunikationssignal oder ein Teil des drahtlosen Kommunikationssignals eine Prüfinformation repräsentiert.

6. Verfahren nach einem der Ansprüche 1 bis 5, wobei das Verfahren ferner umfasst:
- Erhalten einer zweiten Berechtigungsnachweisinformation.

7. Verfahren nach Anspruch 6, wobei die zweite Berechtigungsnachweisinformation separat von der ersten Berechtigungsnachweisinformation erhalten wird.

8. Verfahren nach einem der Ansprüche 1 bis 7, wobei das Prüfen der Berechtigung der Anforderung zum Öffnen des Aufnahmefachs umfasst:
- Prüfen (3041), ob die erfasste Position mit einer vorgegebenen Position übereinstimmt oder innerhalb eines vorgegeben geographischen Gebiets liegt,
- Prüfen (3043), ob die erste Berechtigungsnachweisinformation zum Öffnen des Aufnahmefachs (30) des unbemannten Fahrzeugs (3) berechtigt.

9. Verfahren nach Anspruch 8, wobei die vorgegebene Position eine Auslieferungs- und/oder Einlieferungsposition einer Sendung ist, und der vorgegebene Umweltparameter ein an der Auslieferungs- und/oder Einlieferungsposition der Sendung erfassbarer Umweltparameter ist.

10. Verfahren nach einem der Ansprüche 1 bis 9, wobei das Prüfen der Berechtigung der Anforderung zum Öffnen Aufnahmefachs (30) des unbemannten Fahrzeugs (3) zumindest teilweise in Abhängigkeit einer Berechtigungserfordernisvorgabe erfolgt.

11. Verfahren nach Anspruch 10, wobei die Berechtigungserfordernisvorgabe zumindest teilweise in Abhängigkeit eines Sendungsempfängers und/oder - absenders einer von dem unbemannten Fahrzeug (3) transportierten Sendung, einer von dem unbemannten Fahrzeug (3) transportierten Sendung, der erfassten Position des unbemannten Fahrzeugs (3) und/oder des erfassten Umweltparameters (3) bestimmt wird.

12. Vorrichtung, umfassend:
- Mittel (10-17) eingerichtet zur Ausführung des Verfahrens nach einem der Ansprüche 1 bis 11 oder umfassend jeweilige Mittel zur Ausführung der Schritte des Verfahrens nach einem der Ansprüche 1 bis 11.

13. Computerprogramm, umfassend Programmanweisungen, die dazu ausgebildet sind, bei Ausführung durch mindestens einen Prozessor (10) eine Vorrichtung (1) zu veranlassen, das Verfahren gemäß einem der Ansprüche 1 bis 11 auszuführen.

## Claims

1. Method for checking the authorization to open a receiving compartment (30) of an unmanned vehicle (3), the method comprising:
- obtaining (301) a request to open the receiving compartment (30) of the unmanned vehicle (3) and first proof of authorization information;
- capturing (302-303) a position of the unmanned vehicle (3) and at least one environmental parameter dependent on the position of the unmanned vehicle (3), wherein the environmental parameter dependent on the position of the unmanned vehicle (3) is a wireless communication signal (22);
- checking (304) the authorization of the request to open the receiving compartment (30) of the unmanned vehicle (3) in dependence on the obtained first proof of authorization information, the captured position of the unmanned vehicle (3) and the captured environmental parameter, wherein the checking the authorization of the request to open the receiving compartment comprises the checking (3042) whether the captured environmental parameter matches a predetermined environmental parameter, wherein the checking whether the captured environmental parameter matches a predetermined environmental parameter only reveals a match if the identity and/or origin of the captured wireless communication signal corresponds to a predetermined identity and/or origin; and
- opening and/or causing of opening (306) of the receiving compartment (30) of the unmanned vehicle (3) only if the checking reveals that the request to open the receiving compartment (30) of the unmanned vehicle (3) is authorized.

2. Method according to Claim 1, wherein the request to open the receiving compartment is obtained by a user interface (15) and/or by a wireless communication interface (13, 16) at the unmanned vehicle (3).

3. Method according to either of Claims 1 and 2, wherein the first proof of authorization information is obtained by a user interface (15) and/or by a card interface and/or by a wireless communication interface (13, 16) at the unmanned vehicle (3).

4. Method according to one of Claims 1 to 3, wherein the wireless communication signal is a communication signal of a Bluetooth-Beacon, in particular a communication signal of a Bluetooth-Beacon provided at the inbound and/or outbound delivery position.

5. Method according to one of Claims 1 to 4, wherein the wireless communication signal or a part of the wireless communication signal represents checking information.

6. Method according to one of Claims 1 to 5, wherein the method further comprises:
- obtaining second proof of authorization information.

7. Method according to Claim 6, wherein the second proof of authorization information is obtained separately from the first proof of authorization information.

8. Method according to one of Claims 1 to 7, wherein the checking of the authorization of the request to open the receiving compartment comprises:
- checking (3041) whether the captured position matches a predetermined position or is within a predetermined geographical area,
- checking (3043) whether the first proof of authorization information provides authorization to open the receiving compartment (30) of the unmanned vehicle (3).

9. Method according to Claim 8, wherein the predetermined position is an outbound and/or inbound delivery position of a shipment, and the predetermined environmental parameter is an environmental parameter which is capturable at the outbound and/or inbound delivery position of the shipment.

10. Method according to one of Claims 1 to 9, wherein the authorization of the request to open the receiving compartment (30) of the unmanned vehicle (3) is at least partially checked in dependence on an authorization requirement specification.

11. Method according to Claim 10, wherein the authorization requirement specification is at least partially determined in dependence on a shipment recipient and/or shipment sender of a shipment transported by the unmanned vehicle (3), a shipment transported by the unmanned vehicle (3), the captured position of the unmanned vehicle (3) and/or the captured environmental parameter (3).

12. Apparatus comprising:
- means (10-17) configured to perform the method according to one of Claims 1 to 11 or comprising respective means for performing the steps of the method according to one of Claims 1 to 11.

13. Computer program comprising program instructions which are configured, when executed by at least one processor (10), to cause an apparatus (1) to perform the method according to one of Claims 1 to 11.

## Revendications

1. Procédé pour vérifier l'autorisation pour l'ouverture d'un compartiment de réception (30) d'un véhicule (3) sans conducteur, le procédé comprenant :
- l'obtention (301) d'une demande d'ouverture du compartiment de réception (30) du véhicule (3) sans conducteur et d'une première information de certificat d'autorisation ;
- la détection (302-303) d'une position du véhicule (3) sans conducteur et d'au moins un paramètre extérieur dépendant de la position du véhicule (3) sans conducteur, dans lequel le paramètre extérieur dépendant de la position du véhicule (3) sans conducteur est un signal de communication (22) sans fil ;
- la vérification (304) de l'autorisation de la demande d'ouverture du compartiment de réception (30) du véhicule (3) sans conducteur en fonction de la première information de certificat d'autorisation obtenue, de la position détectée du véhicule (3) sans conducteur et du paramètre extérieur détecté, dans lequel la vérification de l'autorisation de la demande d'ouverture du compartiment de réception comprend la vérification (3042) si le paramètre extérieur détecté coïncide avec un paramètre extérieur spécifié, dans lequel la vérification si le paramètre extérieur détecté coïncide avec un paramètre extérieur spécifié, donne lieu seulement alors à une concordance quand l'identité et/ou la provenance du signal de communication sans fil détecté correspondent à une identité et/ou une provenance spécifiées ; et
- l'ouverture et/ou le déclenchement de l'ouverture (306) du compartiment de réception (30) du véhicule (3) sans conducteur seulement quand il ressort de la vérification que la demande d'ouverture du compartiment de réception (30) du véhicule (3) sans conducteur est autorisée.

2. Procédé selon la revendication 1, dans lequel la demande d'ouverture du compartiment de réception est obtenue par une interface d'utilisateur (15) et/ou par une interface de communication (13, 16) sans fil au niveau du véhicule (3) sans conducteur.

3. Procédé selon l'une quelconque des revendications 1 et 2, dans lequel la première information de certificat d'autorisation est obtenue par une interface d'utilisateur (15) et/ou par une interface de carte et/ou par une interface de communication (13, 16) sans fil au niveau du véhicule (3) sans conducteur.

4. Procédé selon l'une quelconque des revendications 1 à 3, dans lequel le signal de communication sans fil est un signal de communication d'une balise Bluetooth, en particulier un signal de communication d'une balise Bluetooth fournie au niveau de la position de distribution et/ou de la position d'expédition.

5. Procédé selon l'une quelconque des revendications 1 à 4, dans lequel le signal de communication sans fil ou une partie du signal de communication sans fil représente une information de vérification.

6. Procédé selon l'une quelconque des revendications 1 à 5, dans lequel le procédé comprend en outre :
- l'obtention d'une deuxième information de certificat d'autorisation.

7. Procédé selon la revendication 6, dans lequel la deuxième information de certificat d'autorisation est obtenue séparément de la première information de certificat d'autorisation.

8. Procédé selon l'une quelconque des revendications 1 à 7, dans lequel la vérification de l'autorisation de la demande d'ouverture du compartiment de réception comprend :
- la vérification (3041) si la position détectée coïncide avec une position spécifiée ou se situe à l'intérieur d'une région géographique spécifiée,
- la vérification (3043) si la première information de certificat d'autorisation pour l'ouverture du compartiment de réception (30) du véhicule (3) sans conducteur est autorisée.

9. Procédé selon la revendication 8, dans lequel la position spécifiée est une position d'expédition et/ou de distribution d'un envoi, et le paramètre extérieur spécifié est un paramètre extérieur pouvant être détecté au niveau de la position d'expédition et/ou de la position de distribution de l'envoi.

10. Procédé selon l'une quelconque des revendications 1 à 9, dans lequel la vérification de l'autorisation de la demande d'ouverture du compartiment de réception (30) du véhicule (3) sans conducteur est effectuée au moins en partie en fonction d'une spécification d'exigence d'autorisation.

11. Procédé selon la revendication 10, dans lequel la spécification d'exigence d'autorisation est définie au moins en partie en fonction d'un destinataire et/ou d'un expéditeur d'envoi d'un envoi transporté par le véhicule (3) sans conducteur, d'un envoi transporté par le véhicule (3) sans conducteur, de la position détectée du véhicule (3) sans conducteur et/ou du paramètre extérieur (3) détecté.

12. Dispositif, comprenant :
- des moyens (10 - 17) mis au point pour exécuter le procédé selon l'une quelconque des revendications 1 à 11 ou comprenant des moyens respectifs pour exécuter les étapes du procédé selon l'une quelconque des revendications 1 à 11.

13. Programme informatique, comprenant des instructions de programme, qui sont réalisées pour amener, lors de l'exécution par au moins un processeur (10), un dispositif (1) à exécuter le procédé selon l'une quelconque des revendications 1 à 11.
